# EUROPÄISCHE PATENTSCHRIFT

(11) **EP 1 046 125 B1**
(45) Veröffentlichungstag und Bekanntmachung des Hinweises auf die Patenterteilung: **24.12.2008**
(21) Anmeldenummer: 99950639.7
(22) Anmeldetag: 28.09.1999
(51) Int. Cl.: G06K 7/00, G06K 19/07

(54) **DATENTRÄGER**
DATA CARRIER
SUPPORT DE DONNEES

(30) Priorität: 30.09.1998 DE 19845022
(43) Veröffentlichungstag der Anmeldung: 25.10.2000
(73) Patentinhaber: NXP B.V., 5656 AG Eindhoven (NL)
(72) Erfinder: TIMM, Volker, NL-5656 AA Eindhoven (NL); MALZAHN, Ralf, NL-5656 AA Eindhoven (NL); EBER, Wolfgang, NL-5656 AA Eindhoven (NL); BERGER, Dominik, NL-5656 AA Eindhoven (NL); KESSELS, Jozef, L., W., NL-5656 AA Eindhoven (NL); KRAMER, Torsten, NL-5656 AA Eindhoven (NL)
(74) Vertreter: Peters, Carl Heinrich
(86) Internationale Anmeldenummer: PCT/EP1999/007459
(87) Internationale Veröffentlichungsnummer: WO 2000/019353

(56) Entgegenhaltungen:
- WO-A-94/06210
- US-A- 5 406 064

## Beschreibung

Die Erfindung bezieht sich auf einen Datenträger, insbesondere eine Chipkarte.

Aus der US-PS 5.406,064 ist eine IC-Karte bekannt, die wahlweise in einem Betriebsmodus oder einem Energiesparmodus betrieben werden kann. Die Operationen im Betriebsmodus werden nur in übereinstimmung mit einem Befehlssignal ausgeführt, welches aus einer vorbestimmten, externen Einrichtung zugeführt wird, und im Energiesparmodus können die diesem zugehörigen Operationen nach Empfang eines vorbestimmten Freigabesignals beendet und es kann in den Betriebsmodus zurückgekehrt werden. Die IC-Karte enthält eine Informationsverarbeitungsschaitung und eine Freigabesignal-Erzeugungsschaltung zum Ausgeben des Freigabesignals an die Informationsverarbeitungsschaltung zu dem Zeitpunkt, zu dem das Befehlssignal von der externen Einrichtung empfangen wird. Die Informationsverarbeitungsschaltung führt den Prozeß aus, der mit dem Befehlssignal korrespondiert, welches im Betriebsmodus empfangen wird, und veranlaßt danach die IC-Karte, in den Energiesparmodus überzuwechseln. Ein tragbares Terminal, welches die Operation der IC-Karte im Energiesparmodus ermöglicht, enthält eine Taktsignal-Erzeugungsschaltung, die zum Erzeugen eines Taktsignals eingerichtet ist, welches eine niedrigere Frequenz aufweist als der Nennwert der Taktfrequenz der IC-Karte. Ein Interface ist zur Datenübertragung mit der IC-Karte eingerichtet, wobei die Datenübertragungsrate in Proportion zu einem Verhältnis der niedrigen Frequenz des Taktsignals von der Taktsignal-Erzeugungsschaltung zum Nennwert der Taktfrequenz der IC-Karte steht.

Es zeigt sich, daß mit einer derartigen Anordnung eine optimale Ausnutzung der der IC-Karte zugeführten Energie nicht möglich ist.

Die Erfindung hat die Aufgabe, einen Datenträger in der Weise auszubilden, daß eine optimale Ausnutzung der diesem Datenträger zugeführten Energie möglich ist.

Erfindungsgemäß wird diese Aufgabe gelöst durch einen Datenträger, insbesondere Chipkarte, mit einer Datenverarbeitungseinheit und wenigstens einer kontaktlosen Schnittstelle, über die die Datenverarbeitungseinheit mit einem Lese-/Schreibgerät zum Austausch von Datensignalen und zur Aufnahme elektrischer Energie zum Betrieb der Datenverarbeitungseinheit gekoppelt werden kann, worin die Datenverarbeitungseinheit zumindest überwiegend mit wenigstens weitgehend asynchron betriebenen Logikbausteinen (,.asynchroner Logik") aufgebaut ist.

In der Regel wird ein einfacherer Aufbau und ein einfacherer Betrieb einer Datenverarbeitungseinheit auf einem Datenträger dadurch erhalten, daß alle oder wenigstens nahezu alle Logikbausteine der Datenverarbeitungseinheit synchron mit einem Taktsignal gesteuert werden. Die zeitlichen Abläufe von Vorgängen zur Verarbeitung von Datensignalen lassen sich damit bekanntermaßen sehr präzise vorbestimmen.

Beim erfindungsgemäßen Datenträger wird jedoch die Datenverarbeitungseinheit derart aufgebaut, daß zumindest die meisten Logikbausteine darin, wenn nicht alle, als asynchron betriebene Logikbausteine eingerichtet sind. Diese asynchron betriebenen Logikbausteine werden auch als asynchrone Logik bezeichnet. Sie unterscheiden sich von synchron betriebenen Logikbausteinen dadurch, daß sie nicht mehr durch ein möglichst zentral erzeugtes Taktsignal gesteuert werden, sondern daß sie vielmehr nach der Art einer "Handshake-Steuerung" arbeiten. Derartig ausgebildete Logikbausteine treten nur auf ein Anforderungssignal hin in Tätigkeit. Haben sie ihre Operation ausgeführt und liegt deren Ergebnis vor, wird dies durch Ausgabe einer Fertigmeldung angezeigt. Das Zusammenwirken asynchron betriebener Logikbausteine erfolgt dann durch die Weiterleitung beispielsweise der Fertigmeldung eines ersten Logikbausteins als Anforderungssignal an den nächsten Logikbaustein in der Reihenfolge der durchzuführenden Bearbeitungsschritte für die Datensignale. Dabei tritt ein vorgegebenes Zeitraster wie bei einem vorgegebenen Taktsignal nicht mehr auf; vielmehr ergibt sich die benötigte Zeitspanne für die durchzuführende Verarbeitung von Datensignalen allein aus der Kombination der Verarbeitungszeiten in den einzelnen, nacheinander zu durchlaufenden Logikbausteinen. Es zeigt sich, daß die Verarbeitungszeiten in den Logikbausteinen von der daran anliegenden Versorgungsspannung stark abhängig ist. Würde ein festes Taktsignal vorgegeben werden, könnte mit abnehmender Versorgungsspannung die Schwierigkeit entstehen, daß durch Verarbeitungszeiten, die die vorgegebenen Taktperioden übersteigen, bei der Verarbeitung der Datensignalen Fehler auftreten. Mit asynchroner Logik steigt allenfalls die Verarbeitungszeit für die Datensignale an; Fehler können dadurch nicht auftreten.

Dies ist besonders vorteilhaft, wenn im vorliegenden Fall der Datenträger über die kontaktlose Schnittstelle nur eine sehr geringe elektrische Energie zugeführt erhält. Dann dehnt sich der gesamte Zeitbedarf für die Verarbeitung der Datensignale mehr und mehr aus, Fehler in der Verarbeitung der Datensignale können jedoch durch Überschreiten einer vorgegebenen Taktperiode nicht auftreten. Durch die automatische Anpassung der Verarbeitungszeiten der Datensignalverarbeitung in den asynchron betriebenen Logikbausteinen wird der Energiebedarf der Datenverarbeitungseinheit stets exakt der über die kontaktlose Schnittstelle zugeführten elektrischen Energie angepaßt. Die Datenverarbeitungseinheit wird somit nicht zwangsweise in eine Betriebsart überführt, in der sie - wenn vielleicht auch kurzzeitig - mit ihrem augenblicklichen Energieverbrauch die über die kontaktlose Schnittstelle zuführbare höchste Energie überschreitet. Umgekehrt bietet die erfindungsgemäße Ausgestaltung des Datenträgers die Möglichkeit, einzelne Signalverarbeitungsschritte bzw. eine Gesamtheit von Signalverarbeitungsschritten mit einem Minimum an Energieaufwand innerhalb eines bestimmten Zeitraumes abzuwickeln. Sinkt die zugeführte elektrische Energie, wird automatisch die Signal verarbeitung in den asynchron betriebenen Logikbausteinen langsamer, und umgekehrt kann sie gezielt durch Verringerung der Energiezufuhr auf einen vorgegebenen Wert mit gleichzeitiger Energieeinsparung gebracht werden.

Besonders vorteilhaft kann dies ausgenutzt werden, wenn zwei Teile der Datenverarbeitungseinheit innerhalb eines bestimmten Zeitraumes unterschiedlich viele Signalverarbeitungsschritte ausführen müssen. Für die geringere Anzahl der Signalverarbeitungsschritte kann dabei eine geringere Signalverarbeitungsgeschwindigkeit gewählt werden, so daß in diesem Teil der Datenverarbeitungseinheit elektrische Energie eingespart werden kann im Vergleich zu dem anderen Teil der Datenverarbeitungseinheit.

Jedoch bietet der Aufbau der Datenverarbeitungseinheit mit asynchroner Logik über eine zentrale zeitliche Steuerung der Anforderungssignale auch die Möglichkeit, quasisynchron zu arbeiten, und zwar beispielsweise durch einen Synchronisationstakt. Hierzu wird an Ereignisgrenzen, die beispielsweise aus einem Zeitgeber bereitgestellt werden und wenigstens in etwa den bei synchron betriebenen Logikbausteinen erzeugten Instruktionsgrenzen entsprechen, eine Synchronisation des Instruktionsablaufs hergestellt, so daß sich die Datenverarbeitungseinheit außerhalb der Instruktionsgrenzen in der Weise verhält, als würde sie synchron betrieben. Diese Betriebsweise ist insbesondere beim Fehlersuchen der von der Datenverarbeitungseinheit auszuführenden Programme bzw. Programmteile nützlich. Für den bestimmungsgemäßen Betrieb des Datenträgers kann sie abgestellt werden, beispielsweise mit einem Schalter.

Die erfindungsgemäß völlig asynchrone Betriebsweise der Datenverarbeitungseinheit erzeugt für die einzelnen, zu bearbeitenden Datensignale unterschiedliche Ausführungszeiten, die in ihrer Länge nicht vorhersehbar sind. Dadurch können unberechtigte Zugriffe auf den Datenträger, die sich auf das Ermitteln der Ausführungszeiten für die einzelnen Signalverarbeitungsschritte an den Datensignalen ausrichten, in der Praxis unmöglich gemacht werden.

Die völlig asynchrone Betriebsweise des erfindungsgemäßen Datenträgers macht weiterhin einen unberechtigten Zugriff auf Datensignale über eine "Differential Power Analysis" unmöglich. Diese Angriffsmethode macht Gebrauch von Signalverläufen, die durch den Betrieb der Datenverarbeitungseinheit an der kontaktlosen Schnittstelle entstehen. Durch Korrelation verschiedener Signalmuster, die bei verschiedenen Datensignalen erzeugt werden, sollen mit dieser Methode Rückschlüsse auf die verarbeiteten Datensignale erreichbar sein. Da dies den streng synchron taktgesteuerten Ablauf von Operationen voraussetzt, kann durch den Einsatz asynchroner Logik mit einer nicht durch ein Taktsignal synchronisierten Betriebsweise die genannte Angriffsmethode unmöglich gemacht werden.

In einer vorteilhaften Ausgestaltung des erfindungsgemäßen Datenträgers sind die kontaktlose Schnittstelle und die Datenverarbeitungseinheit über eine von der Datenverarbeitungseinheit umfaßte, asynchrone Sende-Empfangsschaltung gekoppelt. Derartige asynchrone Sende-Empfangsschaltungen sind unter der Kurzbezeichnung UART allgemein bekannt. Sie ermöglichen die Aufnahme eines Datensignals mit einem vorgegebenen Takt vom Lese-/Schreibgerät und die dazu asynchrone Weitergabe des Datensignals an die Datenverarbeitungseinheit sowie umgekehrt eine asynchrone Aufnahme eines solchen Datensignals aus der Datenverarbeitungseinheit und dessen synchrone Weiterleitung an das Lese-/Schreibgerät.

Vorteilhaft erfolgt in dem erfindungsgemäßen Datenträger ein zeitlich gestaffelter Betrieb einzelner Stufen innerhalb wenigstens der Datenverarbeitungseinheit. Auch innerhalb der kontaktlosen Schnittstelle kann ein solcher, zeitlich gestaffelter Betrieb vorteilhaft durchgeführt werden. Dadurch wird erreicht, daß zugleich nur wenige, elektrische Energie verbrauchende Stufen innerhalb des Datenträgers in Betrieb sind, so daß eine möglichst gleichmäßige, niedrige Energieaufnahme des Datenträgers über die kontaktlose Schnittstelle erfolgen kann, ohne daß unzulässig hohe Leistungsspitzen auftreten. Dies kommt der Übertragungscharakteristik der kontaktlosen Schnittstelle für die elektrische Energie entgegen.

In einer anderen Ausgestaltung des erfindungsgemäßen Datenträgers weist die kontaktlose Schnittstelle zur Aufnahme der elektrischen Energie zum Betrieb der Datenverarbeitungseinheit die Funktion einer wenigstens weitgehend idealen Stromquelle auf. Das bedeutet, daß die kontaktlose Schnittstelle einen zumindest im wesentlichen konstanten Strom zur Versorgung der Datenverarbeitungseinheit mit elektrischer Energie liefert, wobei dieser Strom zumindest in weiten Bereichen wenigstens nahezu unabhängig von der elektrischen Spannung an einem Anschluß ist, über den der genannte Strom von der kontaktlosen Schnittstelle an die Datenverarbeitungseinheit geliefert wird. Durch diese Ausgestaltung erhält man für den erfindungsgemäßen Datenträger eine Regelungsfunktion der Gestalt, daß bei hohem Energieverbrauch durch die Datenverarbeitungseinheit automatisch die genannte Versorgungsspannung, mit der der Strom geliefert wird, absinkt. Mit sinkender Versorgungsspannung nimmt aber auch die Verarbeitungsgeschwindigkeit für die Datensignale in der Datenverarbeitungseinheit ab. Das bedeutet, daß mit verringerter Versorgungsspannung die Verarbeitungszeiten und damit die durch diese Zeiten entstehende Signalverzögerung für die Datensignale in der Datenverarbeitungseinheit zunehmen. Wenn die Datenverarbeitungseinheit somit langsamer wird, sinkt ihre Aktivität, d.h. die Anzahl der Datenverarbeitungsoperationen je Zeiteinheit. Damit sinkt aber auch ihr Energieverbrauch, wodurch die Stromaufnahme sinkt und damit einen Anstieg der Versorgungsspannung ermöglicht. Auf diese Weise ergibt sich sehr einfach und wirkungsvoll eine Selbstregelung der Rechenleistung der Datenverarbeitungseinheit entsprechend dem Angebot an elektrischer Energie über die kontaktlose Schnittstelle.

Ein Ausführungsbeispiel ist in der Zeichnung dargestellt und wird im nachfolgenden näher beschrieben. Es zeigen
Fig. 1 ein Ausführungsbeispiel für einen erfindungsgemäßen Datenträger,
Fig. 2 ein Beispiel für einen synchron betriebenen Logikbaustein,
Fig. 3 ein Beispiel für einen asynchron betriebenen Logikbaustein ("asynchrone Logik"),
Fig. 4 eine Darstellung der Abhängigkeit der Verarbeitungsgeschwindigkeit für ein Datensignal in einem in CMOS-Technik aufgebauten Logikbaustein von der Versorgungsspannung und
Fig. 5 ein schematisches Ersatzschaltbild zur Erläuterung der Charakteristik der Versorgung des Datenträgers gemäß Fig. 1 mit elektrischer Energie.

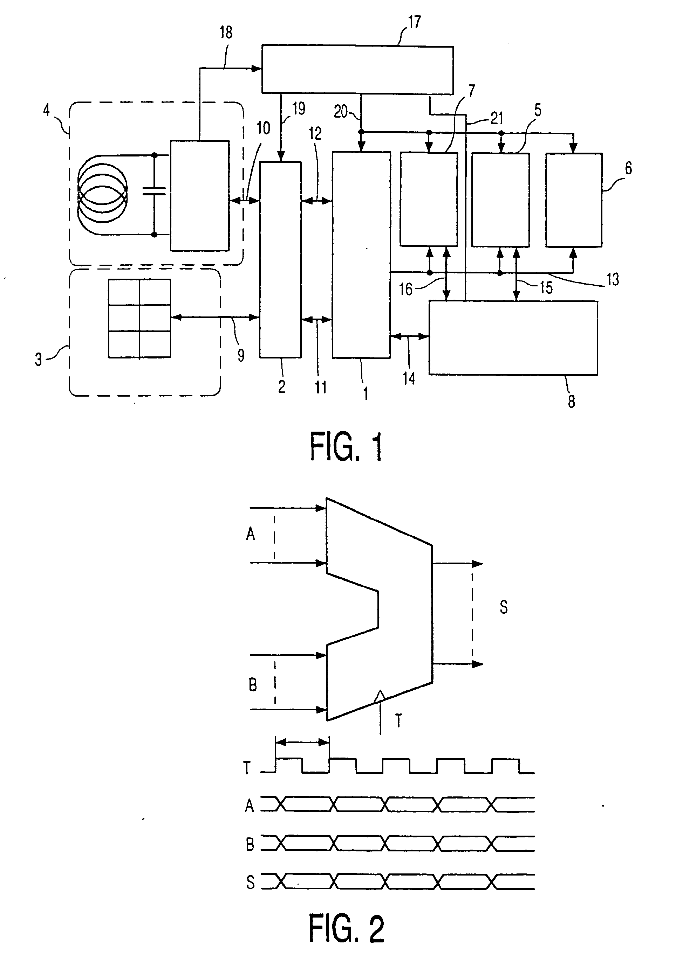

Fig. 1 zeigt ein Blockschaltbild für einen erfindungsgemäßen Datenträger, vorzugsweise eine Chipkarte. Dieser Datenträger umfaßt mehrere sogenannte Module. Als solche sind in Fig. 1 dargestellt:
Ein zentrales Rechenwerk 1, auch als CPU bezeichnet,
eine universelle asynchrone Sende-Empfangsschaltung 2, auch als UART bezeichnet,
eine kontaktbehaftete Schnittstelle 3,
eine kontaktlose Schnittstelle 4,
ein Variablenspeicher 5, bevorzugt als RAM ausgebildet,
ein Programmspeicher 6, bevorzugt als ROM ausgestaltet,
ein nichtflüchtiger Speicher 7, insbesondere in der Form eines EEPROM und ein Verschlüsselungs-Rechenwerk, auch als Krypto-Koprozessor bezeichnet und in Fig. 1 mit dem Bezugszeichen 8 versehen.

Bei dem Datenträger nach Fig. 1 ist die kontaktbehaftete Schnittstelle 3 vorzugsweise entsprechend der ISO-Norm 7816, die kontaktlose Schnittstelle 4 vorzugsweise nach der ISO-Norm 14443 ausgebildet. Beide Schnittstellen 3, 4 sind über je eine Verbindung 9 bzw. 10 der Sende-Empfangsschaltung 2 und durch diese weiter über Verbindungen 11 bzw. 12 mit dem zentralen Rechenwerk 1 verbunden. Über diese Verbindungen werden die von den Schnittstellen 3 bzw. 4 aus einem Schreib-/Lesegerät aufgenommenen Datensignale über die Sende-Empfangsschaltung 2 dem zentralen Rechenwerk 1 zugeführt und umgekehrt von diesem über die Sende-Empfangsschaltung 2 den Schnittstellen 3, 4 zur Abgabe an das Schreib-/Lesegerät zugeleitet. In der Regel wird dabei nur jeweils eine der Schnittstellen 3, 4 zur Zeit in Betrieb sein. Über diese Schnittstelle wird dem Datenträger dann auch die gesamte, benötigte elektrische Energie zugeführt. Je umfangreicher dabei die aus zentralem Rechenwerk 1, Sende-Empfangsschaltung 2, Verschlüsselungs-Rechenwerk 8 und den Speichern 5, 6, 7 bestehende Datenverarbeitungseinheit des Datenträgers ist, desto höher ist auch deren Bedarf an elektrischer Energie, die über die jeweils in Betrieb befindliche Schnittstelle 3 bzw. 4 zugeführt werden muß. Dies führt insbesondere bei der kontaktlosen Schnittstelle 4 schnell an eine Leistungsgrenze, d.h., daß die Datenverarbeitungseinheit mit sehr geringen Versorgungsströmen auskommen muß, die in einem praktischen Ausführungsbeispiel eine Größenordnung von 1mA aufweisen. Mit der aus diesem Versorgungsstrom und der von der Schnittstelle gelieferten Versorgungsspannung resultierenden Versorgungsleistung, d.h. zur Verfügung stehenden elektrischen Energie, müssen alle Elemente der Datenverarbeitungseinheit im Betrieb gespeist werden können.

Nach den zitierten ISO-Normen ist der zulässige Strom zur Energieversorgung in einem der Kontakte der kontaktbehafteten Schnittstelle 3 auf 50mA begrenzt. Diese Stromgrenze stellt für mit zeitgemäß konstruierten Logikbausteinen aufgebaute Datenverarbeitungseinheiten für Datenträger der erfindungsgemäßen Art im allgemeinen keine schwerwiegende Begrenzung dar. Für den Einsatz einer normgemäßen kontaktlosen Schnittstelle mit einer Übertragungsstrecke zwischen dem Datenträger und dem Schreib-/Lesegerät von etwa 10cm läßt sich ein Versorgungsstrom gemäß der Norm in der Größe von etwa 1 bis 2mA erreichen. Ein derart geringer Versorgungsstrom kann jedoch für eine konventionell aufgebaute Datenverarbeitungseinheit zu gering sein. Eine Speisung sämtlicher Logikbausteine der Datenverarbeitungseinheit zu jedem Zeitpunkt, d.h. eine Speisung der Module 1, 2, 5, 6, 7, 8 in Fig. 1, ist damit nicht mehr automatisch gewährleistet. Dies kann zu schwerwiegenden Beeinträchtigungen der Funktion des Datenträgers führen.

Durch die erfindungsgemäße Ausbildung insbesondere des zentralen Rechenwerks 1, der Sende-Empfangsschaltung 2 und des Verschlüsselungs-Rechenwerks 8 innerhalb der Datenverarbeitungseinheit des erfindungsgemäßen Datenträgers wenigstens weitgehend mit asynchron betriebenen Logikbausteinen ("asynchroner Logik") wird jedoch diese Schwierigkeit umgangen. Im Gegensatz zu synchron betriebenen Logikbausteinen ("synchroner Logik"), die nach einem starr vorgegebenen Taktsignal arbeiten und deren Stromverbrauch damit durch dieses Taktsignal und das gemäß diesem Taktsignal abzuarbeitende Programm zur Verarbeitung der Datensignale fest liegt, paßt sich eine Datenverarbeitungseinheit mit asynchroner Logik selbsttätig dem Angebot an elektrischer Energie an. Vorzugsweise werden auch die Speicher 5, 6, 7 derart aufgebaut, daß sie in der Art asynchroner Logik arbeiten. Damit ist gewährleistet, daß die Datenverarbeitungseinheit ohne Beeinträchtigung der Präzision der Verarbeitung der Datensignale zu einem Zeitpunkt einen höheren Energiebedarf hat, als über die gerade im Betrieb befindliche Schnittstelle nachgeliefert werden kann. Darüber hinaus wird der erfindungsgemäße Datenträger in die Lage versetzt, die bereitgestellte elektrische Energie optimal zu nutzen. Das bedeutet, daß die Datenverarbeitungseinheit stets möglichst genau so viel elektrische Energie aufnimmt, wie über die im Betrieb befindliche Schnittstelle angeboten werden kann, daß somit möglichst zu keinem Zeitpunkt ein Überangebot an elektrischer Energie vorhanden ist. Diese Anforderung erfüllt der erfindungsgemäße Datenträger durch die beschriebene Regelfunktion optimal.

Die beschriebene, erfindungsgemäß erzielte Funktion des erfindungsgemäßen Datenträgers mit optimaler Energieausnutzung beinhaltet, daß alle Logikbausteine in allen Modulen 1, 2, 5, 6, 7, 8 der Datenverarbeitungseinheit mit einer Verarbeitungsgeschwindigkeit für die Datensignale arbeiten, die so groß ist, wie es für den Einsatz des Datenträgers nötig ist, und daß sie dabei nur den Anteil an elektrischer Energie verbrauchen, der für diese Funktionsweise mindestens notwendig ist.

Ein besonderer Vorteil der erfindungsgemäßen Ausbildung des Datenträgers nach Fig. 1 zeigt sich in der optimalen Auslegung des zeitgleichen Betriebes mehrerer der Module der Datenverarbeitungseinheit gemäß Fig. 1. Dies wird im folgenden anhand eines Betriebsbeispiels für das zentrale Rechenwerk 1 und das Verschlüsselungs-Rechenwerk 8 näher beschrieben.

Für die programmgesteuerte Verarbeitung zugeführter Datensignale ist das zentrale Rechenwerk 1 über Verbindungen 13 mit den Speichern 5, 6, 7 verbunden. Das Verschlüsselungs-Rechenwerk 8 ist über eine Verbindung 14 mit dem zentralen Rechenwerk 1, über eine Verbindung 15 mit dem Variablenspeicher 5 und über eine Verbindung 16 mit dem nicht flüchtigen Speicher 7 verbunden. In diesem Ausführungsbeispiel ist eine Verbindung zwischen dem Verschlüsselungs-Rechenwerk 8 und dem Programmspeicher 6 nicht vorgesehen, da dieser nur Programmteile speichern soll, die im zentralen Rechenwerk 1 benötigt werden.

Während des Vorgangs einer Berechnung zur Verschlüsselung oder Entschlüsselung von Datensignalen ist bei heute üblichen Programmabläufen das Verschlüsselungs-Rechenwerk 8 grundsätzlich während einer Zeit, deren Dauer eine Größenordnung von einigen Millisekunden aufweist, durchgehend mit Rechenoperationen befaßt, wohingegen während dieser Zeitspanne das zentrale Rechenwerk 1 nur wenige Operationen ausführen muß, die sich im wesentlichen auf das Laden bestimmter Daten aus den Speichern 5, 6, 7 beschränken. Das zentrale Rechenwerk 1 hat somit - werden die ihm übertragenen Rechenoperationen mit derselben Geschwindigkeit ausgeführt wie im Verschlüsselungs-Rechenwerk 8 - während eines sehr großen Teils der genannten Zeitspanne keine Operationen auszuführen. Trotzdem müßte bei taktgebundenem Betrieb des zentralen Rechenwerks 1 eine hohe Versorgungsleistung bereit gestellt werden, um die für diese Betriebsart unvermeidlichen Leistungsspitzen bewältigen zu können.

Gemäß der Erfindung kann jedoch die Verarbeitungsgeschwindigkeit im zentralen Rechenwerk 1 in der genannten Zeitspanne so weit reduziert werden, daß das zentrale Rechenwerk 1 wenigstens nahezu während der gesamten Zeitspanne kontinuierlich die ihm zugewiesenen Operationen ausführt. Dies wird erfindungsgemäß in einfacher Weise dadurch erreicht, daß die zugeführte Energie, d.h. der zur Energieversorgung zugeführte Strom und damit die Versorgungsspannung, entsprechend weit abgesenkt werden, bis sich die noch erforderliche, niedrige Verarbeitungsgeschwindigkeit ergibt. Dies senkt den Energieverbrauch des zentralen Rechenwerks 1 beträchtlich. Nicht nur die mittlere Leistungsaufnahme wird erheblich verringert, sondern auch eventuelle Leistunsspitzen. Im zentralen Rechenwerk 1 tritt erheblich weniger Verlustleistung auf. Die eingesparte elektrische Energie kann umgekehrt einer gemäß dem Angebot an elektrischer Energie möglichst hohen Arbeitsgeschwindigkeit für die genannten Vorgänge der Verschlüsselung bzw. Entschlüsselung im Verschlüsselungs-Rechenwerk 8 dienen. Eine Anordnung zur in diesem Sinne optimalen Verteilung der elektrischen Energie auf die unterschiedlichen Module wird unten stehend beschrieben werden.

Zur Erklärung der Unterschiede zwischen synchron und asynchron betriebenen Logikbausteinen ist in Fig. 2 ein Beispiel für einen synchron betriebenen Logikbaustein wiedergegeben. Dieser soll eine Verknüpfung zwischen einem ersten Operanden A und einem zweiten Operanden B bilden und das Verknüpfungsergebnis S ausgeben. Zur Steuerung dieses synchron betriebenen Logikbausteins wird ein Taktsignal T über einen entsprechenden Eingang zugeleitet. In Fig. 2 sind beispielhafte, zeitliche Verläufe für das Taktsignal T, die Operanden A und B sowie für das Verknüpfungsergebnis S dargestellt. Zum Zeitpunkt der aktiven Flanke des Taktsignals T, hier der ansteigenden Flanke, werden beide Operanden A, B im dargestellten Logikbaustein miteinander verknüpft und das Verknüpfungsergebnis S auf den Ausgang durchgeschaltet. Bei dieser synchronen Betriebsweise bestimmt das Zeitverhalten des Taktsignals T die Betriebseigenschaften des Logikbausteins. Insbesondere wird die Aufnahme elektrischer Energie dadurch in ihrem zeitlichen Ablauf und ihrer Größe festgelegt.

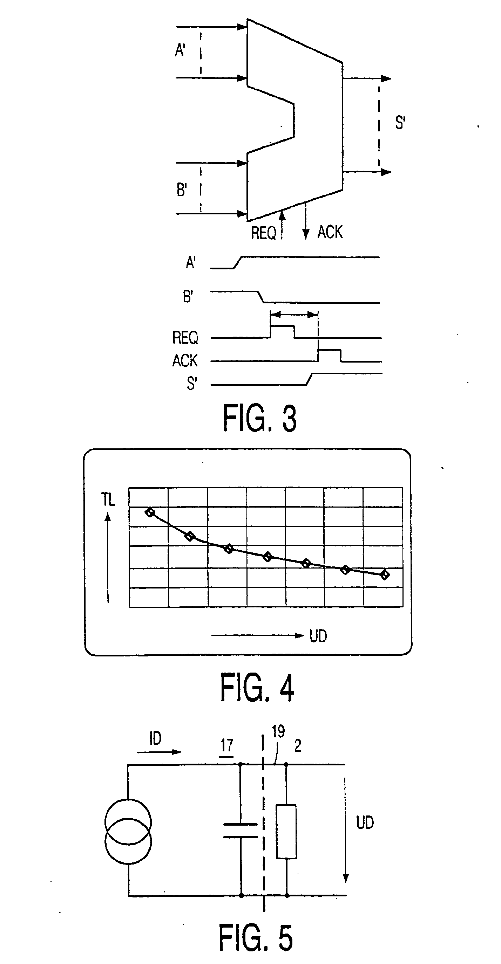

Fig. 3 zeigt im Vergleich einen asynchron betriebenen Logikbaustein. Diesem werden die Operanden A' und B' zugeführt und durch Verknüpfung das Verknüpfungsergebnis S' gewonnen. Die Operation zur Gewinnung des Verknüpfungsergebnisses S' wird jedoch erst auf Zufuhr eines Anforderungssignals REQ an einem vorgesehenen Eingang hin vorgenommen. Die Operanden A' und B' können daher bis zum Auftreten des Anforderungssignals REQ zu beliebigen Zeitpunkten zugeführt werden. Eine synchrone Betriebsweise mit anderen Logikbausteinen, verknüpft durch ein gemeinsames Taktsignal, ist nicht vorgesehen und auch nicht erforderlich.

Ist die Operation vom asynchron betriebenen Logikbaustein ausgeführt worden und liegt das Verknüpfungsergebnis S' vor, wird dies durch ein eigenständig vom Logikbaustein erzeugtes und auf einer zugehörigen Leitung abgegebenes Signal ACK, welches eine Fertigmeldung darstellt, angezeigt. Nach Abgabe der Fertigmeldung ACK, jedoch nicht davor, kann das Verknüpfungsergebnis S' auf den zugehörigen Leitungen abgegriffen werden.

Die zeitliche Abfolge eines Beispiels der beschriebenen Signale ist in Fig. 3 ebenfalls dargestellt.

Derartige Logikbausteine und daraus zusammengesetzte Schaltungsanordnungen arbeiten ohne gemeinsames Taktsignal allein auf Grundlage und nach Maßgabe der Signallaufzeiten. Mehrere derartige, asynchron betriebene Logikbausteine wirken dabei im sogenannten "Handshake"-Verfahren zusammen. Dabei steuert eine Fertigmeldung eines ersten Logikbausteins in einer Kette von Logikbausteinen, durch die in logischer Abfolge ein Datensignal zu bearbeiten ist bzw. mehrere Datensignale zu verknüpfen sind, die Bildung eines Anforderungssignals für einen nachfolgenden Logikbaustein. Die Operation des nachfolgenden Logikbausteins wird daher erst bei Vorliegen der Verknüpfungsergebnisse des bzw. der voraufgehenden Logikbausteine eingeleitet. Erhöht sich die Signallaufzeit in den Logikbausteinen durch Absinken der Versorgungsspannung an denselben, wird automatisch die gesamte Signalverarbeitung langsamer, ohne daß es zu Schwierigkeiten im logischen Ablauf der durchzuführenden Operationen kommen kann. Die Verarbeitungsgeschwindigkeit läßt sich damit über die Einstellung der Versorgungsspannung problemlos steuern.

Eine umfangreiche Datenverarbeitungseinheit bzw. ein umfangreiches Modul einer solchen Datenverarbeitungseinheit mit einer großen Anzahl von Logikbausteinen kann gegebenenfalls in kleinere Teilmodule gegliedert sein, deren asynchrone Betriebsweise überschaubar ist. Dann kann innerhalb der einzelnen Teilmodule eine asynchrone Betriebsweise nach dem "Handshake"-Verfahren durchgeführt werden; in gleicher Weise können die Teilmodule untereinander in Verbindung treten.

Fig. 4 zeigt schematisch in einem Diagramm eine nichtlineare Abhängigkeit zwischen der Versorgungsspannung UD eines asynchron betriebenen Logikbausteins und der darin auftretenden Laufzeit TL für die Signalverarbeitung. Der beispielhaft dargestellte Zusammenhang gilt insbesondere für in CMOS-Technik aufgebaute Logikbausteine. Üblicherweise folgt bei Logikbausteinen in CMOS-Technik der in Fig. 4 dargestellte Zusammenhang einer quadratischen Funktion.

Die beschriebene Betriebsweise gemäß dem "Handshake"-Verfahren wird bevorzugt nicht nur für die Logikbausteine im zentralen Rechenwerk 1 und im Verschlüsselungs-Rechenwerk 8 angewandt, sondern auch für die Steuerung der Speicher 5, 6, 7.

Die Module des Datenträgers nach Fig. 1 können nun in einfacher Weise in mehreren Betriebsmoden betrieben werden, die sich in ihrem Energieverbrauch und daraus folgernd in ihrer Verarbeitungsgeschwindigkeit unterscheiden. Dabei kann sowohl eine gestufte Einstellung des Energieverbrauchs über eine gestufte Einstellung der Versorgungsspannung einzelner Module bzw. der gesamten Datenverarbeitungseinheit erfolgen als auch eine stufenlose Anpassung des Energieverbrauchs durch eine stufenlose Einstellung der Versorgungsspannung, die sich zum Beispiel durch den oben beschriebenen Regelmechanismus ergeben kann. In beiden Fällen wird die Eigenheit der asynchronen Logik ausgenutzt, zu jedem Wert der Versorgungsspannung eine dazu passende Signalverarbeitungsgeschwindigkeit einzustellen.

Der Datenträger gemäß Fig. 1 umfaßt für die Steuerung der vorstehend beschriebenen Betriebsweisen einen Versorgungsspannungsgenerator 17, dem von der kontaktlosen Schnittstelle 4 die der Versorgung der gesamten Datenverarbeitungseinheit dienende Energie über eine Verbindung 18 zugeleitet wird. Über weitere Verbindungen 19, 20, 21 wird die der Versorgung dienende Energie auf die Sende-Empfangsschaltung 2, das zentrale Rechenwerk 1 mit den Speichern 5, 6, 7 bzw. das Verschlüsselungs-Rechenwerk 8 verteilt. Zur Einstellung unterschiedlicher Signalverarbeitungsgeschwindigkeiten können dabei über die Verbindungen 19, 20, 21 unterschiedlich große Versorgungsströme bzw. Versorgungsspannungen abgegeben werden. Der Versorgungsspannungsgenerator 17 kann dazu vom zentralen Rechenwerk 1 steuerbar ausgeführt sein.

Fig. 5 zeigt in grob schematischer Darstellung das Prinzipschaltbild des Versorgungsspannungsgenerators 17 bezüglich jeder der Verbindungen 19, 20 bzw. 21 mit den daran angeschlossenen Modulen 2 bzw. 1, 5, 6, 7 bzw. 8 der Datenverarbeitungseinheit. Beispielhaft ist das Zusammenwirken zwischen dem Versorgungsspannungsgenerator 17 und der Sende-Empfangsschaltung 2 über die Verbindung 19 dargestellt. Der Versorgungsspannungsgenerator 17 weist in seiner Ersatzschaltbild-Darstellung eine wenigstens nahezu ideale Stromquelle auf, die einen Versorgungsstrom ID liefert. Für diese Stromquelle bildet die Sende-Empfangsschaltung 2 eine im wesentlichen ohmsche Last. Ein Pufferkondensator dient der Glättung von Schwankungen der Versorgungsspannung UD, die sich an der Sende-Empfangsschaltung 2 einstellt. Der Pufferkondensator dient dabei der Darstellung der parasitären Kapazität der durch das Ersatzschaltbild wiedergegebenen Anordnung.

Die von dem Versorgungsspannungsgenerator 17 gespeisten Module, also auch die Sende-Empfangsschaltung 2, führen nur dann einen Versorgungsstrom ID, wenn sie aktiv sind, d.h. wenn in ihnen eine Signalverarbeitung vorgenommen wird. Sie sind somit durch einen zeitlich variablen ohmschen Widerstand darzustellen. Im allgemeinen ist jedoch auch die Stromquelle zeitlich variabel. Steigt nun die Aktivität des gespeisten Moduls bzw. der gespeisten Module, da in der vorzusehenden Verarbeitung der Datensignale eine höhere Anzahl von logischen Operationen durchzuführen ist, sinkt die resultierende Versorgungsspannung UD, da das Modul bzw. die Module einen größeren Strom aufnehmen, also einen kleineren Widerstand bilden. Mit verringerter Versorgungsspannung UD nimmt die Signallaufzeit in den Modulen bzw. deren Logikbausteinen zu. Dadurch werden die Module langsamer, ihre Aktivität sinkt, und damit sinkt auch ihr Energieverbrauch. Dies führt jedoch zu einem Anstieg der Versorgungsspannung UD, da nun die Module einen größeren ohmschen Widerstand darstellen. Der derart aufgebaute Versorgungsspannungsgenerator ist somit selbstregelnd.

In Fig. 1 bildet der Versorgungsspannungsgenerator 17 mehrere derartige selbstregelnde Kreise. Durch je nach auszuführenden Operationen in den einzelnen, zu speisenden Modulen festgelegten Versorgungsstrom ID können, gegebenenfalls programmgesteuert, die Verarbeitungsgeschwindigkeiten der einzelnen Module so aufeinander abgestimmt werden, daß die zur Verfügung stehende Energie gerade so verteilt wird, daß für die Anzah vorgegebener Signalverarbeitungsschritte in den verschieden gespeisten Modulen die gesamte, dafür benötigte Zeitspanne übereinstimmt. Dadurch wird eine optimale Energieausnutzung bei höchstmöglicher Signalverarbeitungsgeschwindigkeit erzielt.

Der Sende-Empfangsschaltung 2 kommt beim erfindungsgemäßen Datenträger die Funktion zu, den Fluß der Datensignale zwischen dem synchron betriebenen Lese-/Schreibgerät und den Schnittstellen 3, 4 einerseits und der asynchronen Logik des Datenträgers andererseits abzuwickeln. Dabei kann die Sende-Empfangsschaltung 2 wie im Beispiel nach Fig. 1 als gesondertes Modul, bevorzugt als gesondertes elektronisches Schaltungsteil, des Datenträgers aufgebaut sein. Die Funktion der Sende-Empfangsschaltung, insbesondere für die Synchronisation der asynchron erzeugten Datensignale zur Abgabe an das Lese-/Schreibgerät, kann jedoch auch vom zentralen Rechenwerk 1 ausgeführt werden. Dazu können für das zentrale Rechenwerk 1 bestimmte Rechenoperationen vorgesehen sein. Welche dieser Realisierungsformen bevorzugt wird, richtet sich im wesentlichen nach der geforderten Signalverarbeitungsgeschwindigkeit in den Schnittstellen 3, 4 einerseits und dem zentralen Rechenwerk 1 andererseits. Bei höheren Signalverarbeitungsgeschwindigkeiten wird ein gesonderter Schaltungsaufbau für die Sende-Empfangsschaltung 2 einer Realisierung durch Programmschritte im zentralen Rechenwerk vorgezogen. Die Grenze liegt vorzugsweise zwischen 50 und 100 Kilobaut, gemessen, an einem seriellen Datensignal. In jedem Fall wird eine automatische Synchronisation zwischen dem Datenträger und dem Lese-/Schreibgerät erreicht.

Durch den Aufbau der Datenverarbeitungseinheit mit asynchron betriebenen Logikbausteinen wird eine zumindest weitgehend statistische, zeitliche Verteilung der Längen der Ausführungszeiten der Signalverarbeitungsschritte und auch eine zumindest weitgehend statistische Verteilung der Zeitpunkte erreicht, zu denen die einzelnen Verarbeitungsschritte auftreten. Diese durch die asynchrone Logik hervorgerufene Zufälligkeit der Ausführungszeiten bewirkt zum einen ein derart zeitlich gestaffeltes Anschalten der einzelnen Logikbausteine, Teilmodule bzw. Module, daß der Betrieb dieser einzelnen Elemente nacheinander erfolgt und damit statistisch gleichmäßig so verteilt ist, daß ein möglichst niedriger, gleichmäßiger Energieverbrauch stattfindet. Ein zweiter Vorteil gegenüber einer gleichzeitigen Betriebsweise der genannten Logikbausteine, Teilmodule bzw. Module liegt andererseits daran, daß der Stromverbrauch des Datenträgers kein eindeutiges reproduzierbares Abbild der darin ausgeführten Signalverarbeitungsschritte ist. Dies ist ein großer Vorteil zur Verhinderung der sogenannten "Differential Power Analysis". Eine Ausforschung der Verarbeitungsabläufe des erfindungsgemäßen Datenträgers nach dieser Methode wird somit wirksam verhindert.

Im übrigen können für einen durch die Leistungsfähigkeit der kontaktlosen Schnittstelle 4 vorgegebenen Versorgungsstrom ID die einzelnen, nacheinander betriebenen Elemente des Datenträgers, d.h. die Logikbausteine, Teilmodule bzw. Module derart ausgelegt werden, daß ihr individueller Stromverbrauch nicht größer ist als der zur Verfügung stehende Versorgungsstrom ID im ungünstigsten Betriebsfall. Wenn dann die einzelnen Elemente nacheinander arbeiten, kann der Stromverbrauch des Datenträgers durch Überlagerung der Stromverbräuche aller genannten Elemente nicht über den genannten Versorgungsstrom steigen.

## Patentansprüche

1. Datenträger, insbesondere Chipkarte, mit einer Datenverarbeitungseinheit (1) und wenigstens einer kontaktlosen Schnittstelle (4), über die die Datenverarbeitungseinheit mit einem Lese-/Schreibgerät zum Austausch von Datensignalen und zur Aufnahme elektrischer Energie zum Betrieb der Datenverarbeitungseinheit gekoppelt werden kann, worin die Datenverarbeitungseinheit zumindest überwiegend mit wenigstens weitgehend asynchron betriebenen Logikbausteinen ("asynchroner Logik") aufgebaut ist.

2. Datenträger nach Anspruch 1, **dadurch gekennzeichnet, daß** die kontaktlose Schnittstelle und die Datenverarbeitungseinheit über eine von der Datenverarbeitungseinheit umfaßte, asynchrone Sende-Empfangsschaltung gekoppelt sind.

3. Datenträger nach Anspruch 1 oder 2, **gekennzeichnet durch** einen zeitlich gestaffelten Betrieb einzelner Stufen innerhalb wenigstens der Datenverarbeitungseinheit.

4. Datenträger nach einem der vorhergehenden Ansprüche, **dadurch gekennzeichnet,**
**daß** die kontaktlose Schnittstelle zur Aufnahme der elektrischen Energie zum Betrieb der Datenverarbeitungseinheit die Funktion einer wenigstens weitgehend idealen Stromquelle aufweist.

## Claims

1. A data carrier, notably a chip card which includes a data processing unit (1) and at least one contactless interface (4) via which the data processing unit can be coupled to a read/write apparatus in order to exchange data signals and to take up electrical energy for the operation of the data processing unit, the data processing unit being constructed at least mainly of at least substantially asynchronously operating logic components (asynchronous logic).

2. A data carrier as claimed in claim 1, **characterized in that** the contactless interface and the data processing unit are coupled to one another via an asynchronous transmit/receive circuit which is included in the data processing unit.

3. A data carrier as claimed in claim 1 or 2, **characterized in that** individual stages within at least the data processing unit operate in a time interleaved manner.

4. A data carrier as claimed in one of the preceding claims, **characterized in that** the contactless interface for receiving the electrical energy for the operation of the data processing unit has the function of an at least substantially ideal current source.

## Revendications

1. Support de données, en particulier carte à puce comprenant une unité de traitement de données (1) et au moins une interface sans contact (4), par l'intermédiaire de laquelle l'unité de traitement de données peut être couplée à un appareil de lecture/appareil enregistreur pour échanger des signaux de données et pour recevoir l'énergie électrique destinée à faire fonctionner l'unité de traitement de données, dans lequel l'unité de traitement de données comporte du moins principalement des éléments logiques fonctionnant en grande partie de manière asynchrone (« logique asynchrone»).

2. Support de données selon la revendication 1, **caractérisé en ce que** l'interface sans contact et l'unité de traitement de données sont couplées via un circuit d'émission-réception asynchrone contenu dans l'unité de traitement de données.

3. Support de données selon la revendication 1 ou 2, **caractérisé par** un fonctionnement échelonné dans le temps d'étapes uniques dans au moins l'unité de traitement de données.

4. Support selon l'une quelconque des revendications précédentes, **caractérisé en ce que** l'interface sans contact pour recevoir l'énergie électrique destinée à faire fonctionner l'unité de traitement de données, fonctionne au moins comme une source de courant en grande partie idéale.
